# FASCICULE DE BREVET EUROPEEN

(11) **EP 1 216 136 B1**
(45) Date de publication et mention de la délivrance du brevet: **28.07.2004**
(21) Numéro de dépôt: 00927341.8
(22) Date de dépôt: 15.05.2000
(51) Int. Cl.: B29C 49/56, B29C 33/26

(54) **MACHINE DE SOUFFLAGE COMPORTANT UN MECANISME DE FERMETURE ET DE VERROUILLAGE**
BLASFORMMASCHINE MIT EINEM SCHLIESS- UND VERRIEGELUNGSMECHANISMUS
BLOW-MOLDING MACHINE COMPRISING A CLOSING AND LOCKING MECHANISM

(30) Priorité: 17.05.1999 FR 9906316
(43) Date de publication de la demande: 26.06.2002
(73) Titulaire: SIDEL, 76053 Le Havre Cedex (FR)
(72) Inventeur: EVRARD, Alain, F-76053 Le Havre Cedex (FR)
(74) Mandataire: Siloret, Patrick
(86) Numéro de dépôt international: PCT/FR2000/001304
(87) Numéro de publication internationale: WO 2000/069614

(56) Documents cités:
- FR-A- 2 059 446
- FR-A- 2 088 523
- FR-A- 2 170 075
- FR-A- 2 653 058
- US-A- 3 402 431

## Description

L'invention se rapporte au domaine des machines de soufflage d'articles en matériau plastique dans lesquelles une ébauche de l'article est introduite et moulée par soufflage à l'intérieur d'une unité de moulage dite "en portefeuille".

Dans de telles machines, les unités de moulage sont constituées de deux supports de moules portant chacun un demi-moule. Les supports sont articulés entre eux entre une position ouverte, qui permet d'introduire l'ébauche de l'article dans l'empreinte délimitée par le moule, et une position fermée dans laquelle les deux demi-moules sont en appui l'un contre l'autre par leur plan de joint.

Le plus souvent, l'axe d'articulation des deux supports est contenu dans le plan du plan de joint et il s'étend le long d'un bord de celui-ci.

Une telle unité de moulage est décrite par exemple dans la demande de brevet GB-A-1.230.090. Dans ce document on peut voir un mécanisme de commande de l'ouverture et de la fermeture de l'unité de moulage. Ce mécanisme comporte un coulisseau qui est mobile selon une direction perpendiculaire à l'axe d'articulation des deux supports. Le coulisseau est relié à chacun des supports par une biellette qui est articulée par une extrémité sur le coulisseau et par son autre extrémité sur le support associé.

Ainsi, les deux biellettes permettent de convertir un mouvement rectiligne du coulisseau en deux mouvements rotatifs opposés des supports.

Cependant, pour assurer le maintien de l'unité de moulage en position fermée, le mécanisme proposé nécessite l'emploi de moyens spécifiques.

En effet, au cours du soufflage, l'air sous pression injecté dans l'article plaque ce dernier contre les parois de la cavité. Ainsi, il est transmis sur les deux parties du moule un effort qui tend à provoquer l'ouverture de l'unité de moulage. Or, dans la configuration retenue dans le document cité, les biellettes sont disposées de telle manière que, en position fermée, cet effort d'ouverture se traduit par un effort sur le coulisseau qui tend à le faire reculer vers sa position d'ouverture.

La valeur de cet effort peut devenir très importante lorsque l'air de soufflage est injecté sous forte pression, par exemple sous une pression de 40 bars comme cela est courant dans les machines de soufflage de préformes préalablement injectées.

Cet effort risque d'une part de provoquer l'ouverture du moule, mais surtout, de manière très probable, de provoquer un léger décollement des deux parties du moule au niveau de leur plan de joint. Un tel décollement est indésirable car il provoque la formation sur l'article fini d'une surépaisseur inesthétique.

Le document FR-A- 2 059 446 présente un dispositif d'injection d'ébauches et de soufflage de récipients avec un mécanisme à biellettes et coulisseau dans lequel les biellettes sont agencées pour que, en position fermée, il n'apparaisse pas un effort sur le coulisseau qui tendrait à le faire reculer vers sa position d'ouverture. Toutefois, le dispositif n'empêche pas, a priori, que puisse se produire un léger décollement des deux parties du moule de soufflage au niveau de leur plan de joint.

On connaît divers systèmes pour assurer le maintien de l'unité de moulage en position fermée. Il peut s'agir d'un système de verrouillage qui rend solidaires les deux supports de moules par leur bord opposé à leur axe de rotation. Il peut aussi s'agir de moyens de blocage du coulisseau.

Dans tous les cas, ces moyens de verrouillage entraînent, outre leur présence propre, la présence des moyens de commande adaptés pour leur mise en oeuvre en synchronisme avec les autres systèmes de la machine.

L'invention a donc pour but de proposer un nouveau mécanisme de commande de l'ouverture et de la fermeture de l'unité de moulage qui permette de s'affranchir de la présence de moyens de verrouillage spécifiques, même pour des machines qui utilisent une pression de soufflage importante.

Dans ce but, l'invention propose une machine de soufflage d'articles en matériau thermoplastique, du type dans lequel une unité de moulage comporte un moule en deux parties portées chacune par un support mobile, du type dans lequel les deux supports mobiles sont articulés l'un par rapport à l'autre, du type dans lequel les déplacements des deux supports, entre une position ouverte et une position fermée, sont commandés par un mécanisme qui comporte un coulisseau mobile en translation entre une position d'ouverture et une position de fermeture, et du type dans lequel chaque support est relié au coulisseau par au moins une biellette associée qui est articulée d'une part sur le coulisseau et d'autre part sur ledit support, du type dans lequel, en position fermée, les axes principaux des biellettes, qui sont déterminés chacun comme étant une perpendiculaire commune aux axes d'articulation de la biellette sur le coulisseau et sur le support associé, sont dirigés selon une même direction perpendiculaire à l'axe d'articulation de telle sorte que le mécanisme de commande assure le verrouillage de l'unité de moulage en position fermée, est caractérisée en ce qu'elle comporte les caractéristiques de la revendication 1.

Selon d'autres caractéristiques de l'invention :
- en position fermée, les axes principaux des biellettes sont dirigés selon une même direction perpendiculaire à un plan de joint des parties de moule ;
- en position fermée, les axes principaux des biellettes sont dirigés selon une même direction perpendiculaire à la direction de translation du coulisseau ;
- en position fermée, les axes principaux de deux biellettes associées respectivement à l'un et à l'autre des supports sont alignés ;
- l'un au moins des deux supports comporte plusieurs biellettes associées ;
- le coulisseau comporte deux étriers décalés selon la direction axiale d'articulation des deux supports, de telle sorte que chaque support est associé à au moins deux biellettes décalées selon la direction axiale ;
- le coulisseau est commandé par un vérin ;
- l'unité de moulage est solidaire d'un carrousel animé d'un mouvement de rotation continu, et le coulisseau est commandé par un dispositif à came et à suiveur de came ;
- le coulisseau est sollicité par la came de sa position de fermeture vers sa position d'ouverture, à l'encontre d'un dispositif élastique qui le sollicite en permanence en direction de sa position de fermeture ;
- le dispositif élastique est constitué par un vérin ;
- au cours de l'ouverture du moule, le vérin exerce sur le coulisseau un effort de fermeture réduit ;
- le vérin est un vérin double effet comportant deux chambres à volume variable délimitées par un piston et présentant des sections efficaces sur le piston différentes de telle sorte que, lorsque les deux chambres sont alimentées avec un fluide sous une pression identique, l'une des chambres exerce sur le piston une force supérieure à l'autre, ce qui tend à solliciter le coulisseau vers sa position de fermeture ; et
- la direction de coulissement du coulisseau et l'axe d'articulation des deux supports sont perpendiculaires entres eux et sont contenus dans un plan contenant le plan de joint du moule.

D'autres caractéristiques et avantages de l'invention apparaîtront à la lecture de la description détaillée qui suit ainsi que dans les dessins annexés dans lesquels :
- la figure 1 est une vue schématique de l'unité de moulage selon la direction axiale de l'axe d'articulation des supports de moule, l'unité étant représentée en position ouverte ;
- la figure 2 est une vue similaire à celle de la figure 1 dans laquelle l'unité est représentée en position fermée ;
- la figure 3 est une vue schématique de côté avec coupe partielle de l'unité de moulage ;
- la figure 4 est une vue en perspective éclatée de l'unité de moulage ;
- la figure 5 est une vue en perspective de l'unité de moulage ; et
- la figure 6 est un diagramme illustrant le fonctionnement du mécanisme selon l'invention.

La machine de soufflage selon l'invention peut être une machine d'extrusion-soufflage, dans laquelle l'ébauche de récipient est une paraison tubulaire de matière plastique issue d'une extrudeuse, ou une machine de soufflage de préformes préalablement injectées. L'invention trouvera notamment application dans les machines de fabrication de récipients en polyéthylène téréphtalate (PET) dans lesquelles le soufflage du récipient se fait sous une pression de l'ordre de 40 bars. Elle trouvera aussi application dans les machines munies d'un système de compensation de pression interposé entre l'un des demi-moules et le support associé. En effet, ces moyens de compensation, généralement à pression de fluide, permettent d'éviter tout décollement des demi-moules lors du soufflage mais ils augmentent l'effort exercé sur les supports dans le sens de leur ouverture au cours du soufflage.

L'unité de soufflage 10 qui est illustrée sur les figures comporte deux supports de moule 12 qui sont destinés chacun à porter un demi-moule (non représentés). Dans l'exemple illustré, les supports présentent sensiblement la forme d'un demi tube de manière à recevoir des demi-moules semi-cylindriques.

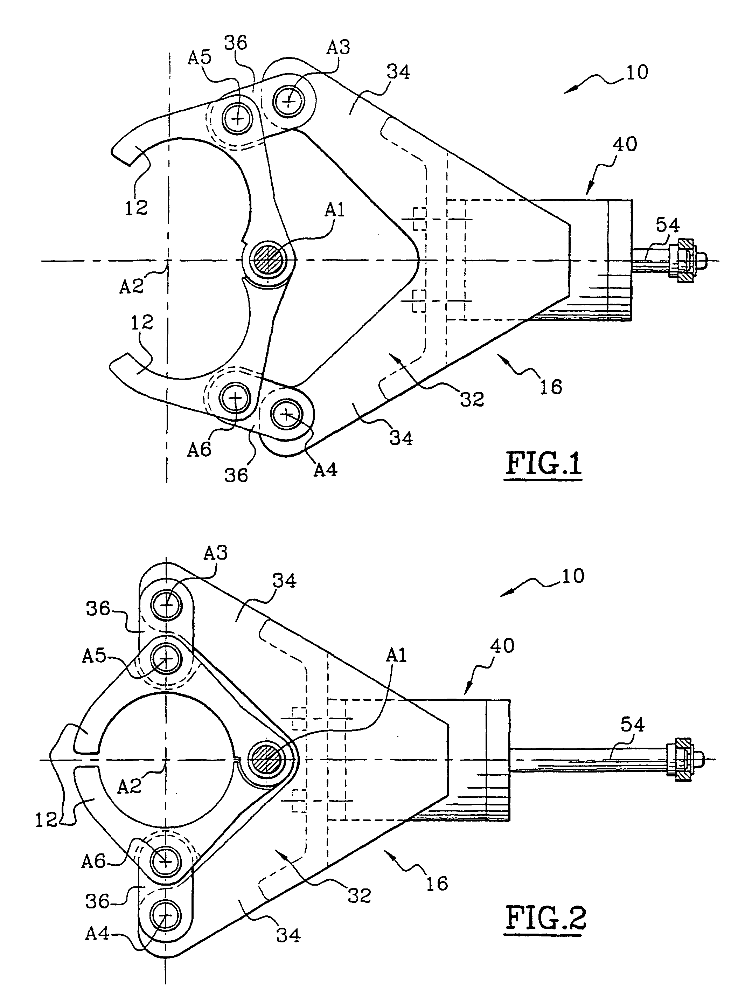

Les deux supports 12 sont articulés par un bord axial commun sur un chassis 14 entre une position ouverte illustrée à la figure 1 et une position fermée illustrée à la figure 2. En position fermée, les supports 12 définissent un espace interne sensiblement cylindrique de telle sorte que, lorsqu'ils portent chacun le demi-moule associé, ces derniers sont en appui l'un contre l'autre par leurs faces de plan de joint respectives. Au contraire, en position ouverte, les deux demi-moules sont écartés l'un de l'autre pour pouvoir introduire une ébauche de récipient à l'intérieur de la cavité qu'ils délimitent en position fermée.

Dans l'exemple illustré, l'unité de moulage est montée sur une machine à carrousel, le chassis 14 étant solidaire d'un rotor (non représenté) qui est entraîné en rotation autour de son axe. Le rotor comporte généralement plusieurs unités de moulages identiques réparties angulairement autour de l'axe de rotation.

Pour faciliter la compréhension du texte, sans que cela constitue une limitation à la portée de l'invention, on se placera dans le cas où le chassis 14 est orienté selon un plan radial du rotor, les supports étant articulés à l'extrémité radiale externe du chassis, autour d'un axe A1 parallèle à l'axe de rotation du rotor. Dans le cas d'un moule simple présentant un plan de joint qui est réellement contenu dans un plan, ce dernier sera donc un plan radial du rotor. En position ouverte, le moule est donc ouvert radialement vers l'extérieur et l'ébauche de récipient peut être engagée entre les deux demi-moules soit selon l'axe A2 du moule, soit selon une direction orientée sensiblement radialement de l'extérieur vers l'intérieur. De même, on prendra comme convention que l'axe d'articulation des supports et celui de rotation du rotor sont verticaux.

Avec cette disposition, l'ouverture de l'unité de moulage se fait donc en tirant les supports 12 radialement vers l'intérieur.

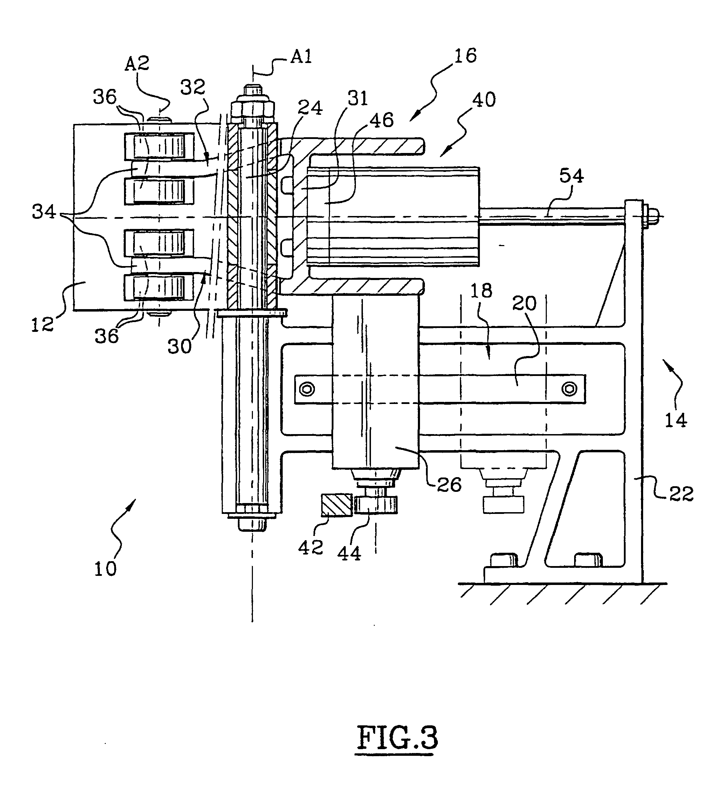

Pour ce faire, l'unité de moulage comporte un coulisseau 16 qui coulisse sur le chassis selon une direction radiale entre une position reculée d'ouverture et une position avancée de fermeture illustrée en traits pleins à la figure 3.

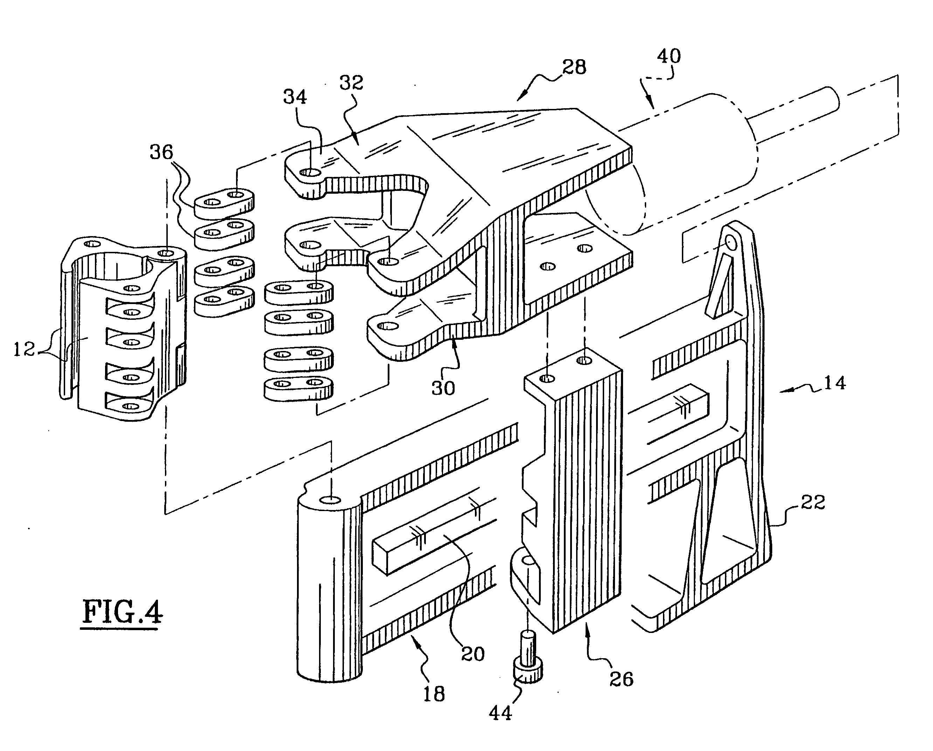

Sur les figures 3 et 4, on peut voir que le chassis 14 comporte une traverse radiale 18 qui est munie, sur un côté, d'un rail 20 sur lequel coulisse le coulisseau 16. Cette traverse 18 présente, à son extrémité radiale interne, un pied 22 par une partie inférieure duquel elle est fixée sur le rotor de la machine. A son extrémité radiale externe, la traverse porte l'arbre d'articulation 24 d'axe A1 des supports 12, lesquels sont agencés au-dessus du niveau de la traverse 18.

Le coulisseau 16 comporte pour l'essentiel un chariot 26 qui coulisse le long du rail 20, sur le côté de la traverse 18, et une chape supérieure 28 qui est fixée sur le chariot et qui se déplace au-dessus de la traverse 18. La chape supérieure 28 comporte deux plaques, inférieure 30 et supérieure 32 qui, en vue de dessus, présentent chacun la forme d'un étrier en V ouvert radialement vers l'extérieur. Chaque étrier 30, 32 s'étend sensiblement selon un plan horizontal perpendiculaire à l'axe A1 d'articulation des deux supports 12, et il comporte donc deux branches 34 qui s'étendent radialement vers l'extérieur, et qui, au moins en position fermée, entourent les deux supports 12. Les deux étriers 30, 32 sont superposés axialement et sont reliés l'un à l'autre par une paroi verticale 31, perpendiculaire à la direction radiale.

L'extrémité de chacune des branches des deux étriers est reliée, par deux biellettes parallèles 36, au support le plus proche. Chaque biellette est donc articulée d'une part autour d'un axe vertical A3, A4 sur l'extrémité d'une branche 34 d'un étrier, et d'autre part sur le support 12 associé autour d'un axe vertical A5, A6.

Bien entendu, les quatre biellettes associées à deux branches superposées des deux étriers 30, 32 sont toutes articulées sur le même support 12, autour du même axe A5 ou A6. Le mécanisme ainsi créé est équivalent à un système ne comportant qu'un étrier dont chaque branche ne serait muni que d'une biellette, mais il présente l'avantage de mieux répartir les efforts transmis entre le coulisseau et les supports.

Chaque biellette 36 présente donc un axe principal d'action qui est la perpendiculaire commune à ses deux axes d'articulation A3 et A5, ou A4 et A6.

Conformément aux enseignements de l'invention, en position fermée de l'unité de moulage, les axes principaux d'action des biellettes 36 sont tous orientés sensiblement selon une même direction. De la sorte, les efforts exercés sur le coulisseau 16 par les supports 12 se compensent et s'annulent intégralement.

De préférence, comme dans le dispositif illustré sur les figures, l'orientation des biellettes 36 est sensiblement perpendiculaire au plan de joint des deux demi-moules pour que l'action de serrage soit optimale.

De plus, on peut voir que, en position fermée, l'orientation des biellettes est perpendiculaire à la direction radiale de coulissement du coulisseau 16. Ainsi, la disposition du mécanisme illustré sur les figures est telle que, en position fermée, les axes A2 à A6 sont tous sensiblement contenus dans un même plan vertical perpendiculaire à la direction radiale de coulissement du coulisseau 16.

Selon l'invention, les étriers 30, 32 et les biellettes 36 sont dimensionnées de manière à ce que, en position fermée, le mécanisme sollicite les demi-moules en appui l'un contre l'autre avec une force importante, les biellettes 36 étant sollicitées en compression et les étriers 30, 32 subissant un effort d'écartement. Or, grâce à l'invention, l'effort d'écartement exercé sur les branches de chaque étrier est symétrique et perpendiculaire à la direction de coulissement, si bien que l'effort de serrage des deux demi-moules ne se traduit par aucun effort important tendant à faire avancer ou reculer le coulisseau 16.

De même, le dispositif selon l'invention permet d'obtenir un effort de serrage particulièrement important des deux demi-moules, sans que l'on ait besoin de fournir une énergie importante au coulisseau car, lors de l'arrivée en position fermée, l'orientation des biellettes est telle que le rapport de démultiplication entre le mouvement radial du coulisseau et le mouvement tangentiel des deux supports est très important. Or, l'effort dû au serrage n'intervient qu'au cours de la toute dernière partie de la trajectoire du coulisseau 16 vers sa position fermée, c'est-à-dire lorsque la démultiplication est la plus favorable.

Ainsi, le mécanisme qui assure le mouvement d'ouverture et de fermeture de l'unité de moulage assure aussi la fonction de verrouillage en position fermée.

On remarquera que les biellettes 36 sont articulées sur les supports au niveau d'un plan médian qui est un plan vertical de symétrie de chacun des deux supports 12, de manière que l'effort de poussée exercé par les biellettes 36 sur chaque support soit réparti de manière équilibrée, ce qui permet d'obtenir une force de serrage homogène au niveau du plan de joint du moule.

Dans la machine illustrée, le coulisseau 16 est déplacé entre ses positions avancée et reculée par un dispositif qui combine d'une part un vérin à double effet 40 et d'autre part un dispositif à came 42 et à suiveur de came 44.

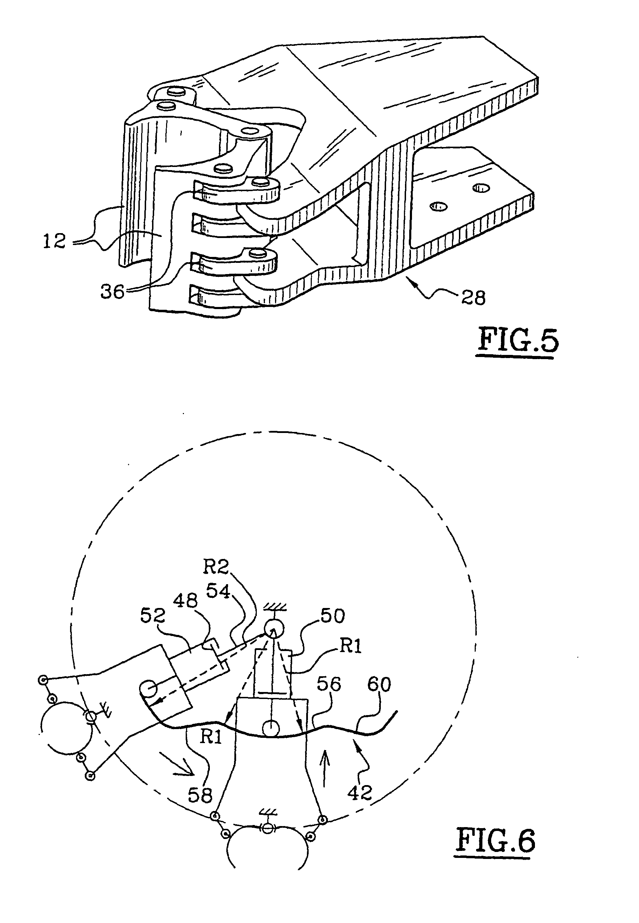

Le vérin 40, par exemple un vérin pneumatique, comporte ainsi un corps cylindrique 46 qui est fixé sur la face arrière de la paroi verticale 31 de la chape 28 qui relie les deux étriers 30, 32. Le vérin 40 est disposé au-dessus de la traverse 18 et il est orienté radialement par rapport au rotor de la machine. Comme on peut le voir sur le schéma de la figure 6, le vérin 40 comporte un piston 48 qui délimite dans le corps 46 deux chambres à volume variable interne 50 et externe 52. Le piston 48 comporte bien entendu une tige 54 qui s'étend radialement vers l'intérieur pour être fixé à l'extrémité supérieure du pied 22. Ainsi, le piston 48 se trouve toujours à la même distance de l'axe de rotation du rotor tandis que le corps 46 du vérin est susceptible de suivre les mouvements radiaux du coulisseau 16.

De la sorte, lorsque la chambre interne 50 du cylindre est alimentée en fluide sous pression, le vérin 40 sollicite le coulisseau 16 vers sa position d'ouverture, reculé vers l'intérieur. Au contraire, lorsque la chambre externe 52 est alimentée, le coulisseau 16 est commandé radialement vers l'extérieur vers sa position de fermeture de l'unité de moulage. Si les deux chambres sont alimentées à la même pression, la présence de la tige 54 au travers de la chambre interne, qui diminue la section utile de cette chambre, implique que le vérin sollicite le coulisseau 16 vers sa position avancée de fermeture. Cet effort résiduel est certes faible, mais il n'est pas négligeable.

Par ailleurs, dans le cadre d'une unité de moulage installée sur une machine à carrousel, on peut voir sur les figures que le chariot 26 porte, à son extrémité inférieure, un galet 44 qui est monté à rotation autour d'un axe vertical et qui est destiné à coopérer avec une came 42 qui est disposée sur une partie de la périphérie du rotor, mais qui est fixe.

La came 42 est agencée radialement à l'extérieur par rapport au galet 44. Elle comporte ainsi un tronçon central 56 circulaire dont l'axe est confondu avec celui du rotor et qui présente un rayon R1. Sur chaque côté du rotor, il est prévu un tronçon d'engagement 58 et une tronçon de dégagement 60. Le tronçon d'engagement 58 est situé avant le tronçon central 56 sur la trajectoire du rotor, et donc du galet 44, et il est prévu pour amener radialement le galet 44 vers l'intérieur depuis un rayon R2, qui est supérieur au rayon R1 et qui correspond à la position avancée d'ouverture du coulisseau, jusqu'au rayon R1 qui correspond à la position de fermeture du coulisseau.

On le voit sur la figure 6, la came 42 ne s'étend au total que sur environ 90° autour de l'axe de rotation du rotor.

Le fonctionnement du dispositif sera maintenant décrit en fonction de la position angulaire de l'unité de moulage considérée autour de l'axe de rotation du rotor.

Lorsque l'unité de moulage considérée n'est pas en regard de la came 42, seule la chambre externe 52 est alimentée en fluide sous pression. De la sorte, le coulisseau 16 est poussé vers l'extérieur pour provoquer le serrage des deux demi-moules l'un contre l'autre. De préférence, le mécanisme est dimensionné pour que l'effort de serrage bloque l'ensemble du mécanisme juste avant de parvenir à la disposition alignée des biellettes qui est illustrée à la figure 2. De cette façon, l'éventuelle apparition de jeux d'usure dans les articulations ne sera pas préjudiciable au bon fonctionnement de l'ensemble car les biellettes ne dépasseront pas cette position d'équilibre.

Juste avant que l'unité de soufflage n'arrive en regard de la came 42, on alimente les deux chambres sous la même pression de fluide. Ainsi, lorsque le galet 44 arrive au contact du tronçon d'engagement 58 de la came 42, l'effort exercé par le vérin 40 et suffisamment faible pour permettre à la came de repousser vers l'intérieur le coulisseau sans que cela ne provoque d'à-coup notable. La compression de l'air contenu dans la chambre externe 52 fait que le vérin continue d'exercer un certain effort sur le coulisseau, ce qui permet de plaquer le galet 44 sans qu'il ne rebondisse.

Ainsi, le système à came 42 et galet 44 permet de déterminer avec exactitude le moment d'ouverture du moule, cela en parfaite coordination avec le procédé de soufflage dont l'avancement est généralement lié directement à la position angulaire de l'unité de moulage autour de l'axe du rotor.

Lorsque le galet 54 atteint le tronçon central 56 de la came, le coulisseau a atteint sa position la plus reculée et l'unité de moulage est complètement ouverte. On notera que le vérin continue de plaquer le galet 44 sur la came, ce qui permet d'avoir une position d'ouverture parfaitement définie à chaque cycle

Lorsque le galet 44 aborde le tronçon de dégagement 60 de la came 42, on peut par exemple conserver une pression de fluide identique dans les deux chambres 50, 52 du vérin 40. Ainsi, l'effort exercé par le vérin est suffisant pour que le coulisseau soit ramené radialement vers l'extérieur lorsque le galet 44 suit le tronçon de dégagement 60, mais le mouvement de fermeture de l'unité de moulage qui en résulte se fait sans effort excessif, de manière fluide.

Lorsque le galet 44 a dépassé la fin du tronçon de dégagement 60, l'unité de moulage se trouve alors en position de fermeture et il est alors possible de n'alimenter que la chambre radiale externe 52 du vérin 40 pour éviter tout recul du vérin 40.

Bien entendu, l'invention pourra aussi être mise en oeuvre en utilisant d'autres moyens de commande du coulisseau 16. On peut par exemple prévoir d'utiliser un vérin seul ou d'utiliser uniquement un système à came.

## Revendications

1. Machine de soufflage d'articles en matériau thermoplastique, du type dans lequel une unité de moulage (10) par soufflage comporte un moule de soufflage en deux parties portées chacune par un support mobile (12), du type dans lequel les deux supports mobiles (12) sont articulés l'un par rapport à l'autre, du type dans lequel les déplacements des deux supports (12), entre une position ouverte et une position fermée, sont commandés par un mécanisme qui comporte un coulisseau (16) mobile en translation entre une position d'ouverture et une position de fermeture, du type dans lequel chaque support (12) est relié au coulisseau (16) par au moins une biellette associée (36) qui est articulée d'une part sur le coulisseau (16) et d'autre part sur ledit support (12), du type dans lequel, en position fermée, les axes principaux des biellettes (36), qui sont déterminés chacun comme étant une perpendiculaire commune aux axes d'articulation de la biellette (36) sur le coulisseau (16) et sur le support associé (12), sont dirigés selon une même direction perpendiculaire à l'axe d'articulation (A1) et perpendiculaire à un plan de joint des parties de moule, de telle sorte que le mécanisme de commande assure le verrouillage de l'unité de moulage en position fermée,
**caractérisée en ce que**, en position fermée, les axes principaux des biellettes (36) sont agencés dans un plan médian de la partie de moule de soufflage portée par le support associé, et le coulisseau (16) comporte au moins un étrier (30, 32) à deux branches (34) qui s'étendent sensiblement dans un plan perpendiculaire à l'axe d'articulation (A1 ) des deux supports (12) et qui, en position fermée, entourent au moins partiellement les deux supports (12), et **en ce que** les biellettes (36) sont articulées aux extrémités libres des deux branches (34) et sont sollicitées en compression pour assurer le verrouillage de l'unité de moulage par soufflage.

2. Machine de soufflage selon la revendication 1, **caractérisée en ce que** le coulisseau (16) comporte deux étriers (30, 32) décalés selon la direction axiale d'articulation des deux supports, de telle sorte que chaque support est associé à au moins deux biellettes (36) décalées selon la direction axiale.

3. Machine de soufflage selon l'une quelconque des revendications précédentes, **caractérisée en ce que**, en position fermée, les axes principaux des biellettes (36) sont dirigés selon une même direction perpendiculaire à la direction de translation du coulisseau (16).

4. Machine de soufflage selon l'une quelconque des revendications précédentes, **caractérisée en ce que**, en position fermée, les axes principaux de deux biellettes (36) associées respectivement à l'un et à l'autre des supports (12) sont alignés.

5. Machine de soufflage selon l'une quelconque des revendications précédentes, **caractérisée en ce que** l'un au moins des deux supports (12) comporte plusieurs biellettes associées (36).

6. Machine de soufflage selon l'une quelconque des revendications précédentes, **caractérisée en ce que** le coulisseau (16) est commandé par un vérin (40).

7. Machine de soufflage selon l'une quelconque des revendications précédentes, **caractérisée en ce que** l'unité de moulage (10) est solidaire d'un carrousel animé d'un mouvement de rotation continu, et **en ce que** le coulisseau (16) est commandé par un dispositif à came (42) et à suiveur de came (44).

8. Machine de soufflage selon la revendication 7, **caractérisée en ce que** le coulisseau (16) est sollicité par la came (42) de sa position de fermeture vers sa position d'ouverture, à l'encontre d'un dispositif élastique qui le sollicite en permanence en direction de sa position de fermeture.

9. Machine de soufflage selon la revendication 8 prise en combinaison avec la revendication 2, **caractérisée en ce que** le dispositif élastique est constitué par un vérin (40).

10. Machine de soufflage selon la revendication 9, **caractérisée en ce que**, au cours de l'ouverture du moule, le vérin (40) exerce sur le coulisseau (16) un effort de fermeture réduit.

11. Machine de soufflage selon la revendication 10, **caractérisée en ce que** le vérin (40) est un vérin double effet comportant deux chambres à volume variable (50, 52) délimitées par un piston (48) et présentant des sections efficaces sur le piston différentes de telle sorte que, lorsque les deux chambres sont alimentées avec un fluide sous une pression identique, l'une des chambres (52) exerce sur le piston (48) une force supérieure à l'autre (50), ce qui tend à solliciter le coulisseau (16) vers sa position de fermeture.

12. Machine de soufflage selon l'une quelconque des revendications précédentes, **caractérisée en ce que** la direction de coulissement du coulisseau (16) et l'axe d'articulation (A1) des deux supports (12) sont perpendiculaires entres eux et sont contenus dans un plan contenant le plan de joint du moule.

## Claims

1. Machine for blow-moulding articles made of thermoplastic material, of the type in which a blow-moulding unit (10) comprises a blow mould in two portions, each supported by a mobile support (12), of the type in which the two mobile supports (12) are articulated relative to each other, of the type in which the movements of the two supports (12), between an open position and a closed position, are controlled by a mechanism which comprises a slide (16) that can move in translation between an open position and a closed position, of the type in which each support (12) is connected to the slide (16) by at least one associated link (36) which is articulated on one side on the slide (16) and on the other side on the said support (12), of the type in which, in the closed position, the main axes of the links (36), which are each determined as being a perpendicular common to the axes of articulation of the link (36) on the slide (16) and on the associated support (12), are directed in one and the same direction perpendicular to the axis of articulation (A1) and perpendicular to a parting line of the mould portions, such that the control mechanism locks the moulding unit in the closed position,
**characterized in that**, in the closed position, the main axes of the links (36) are arranged in a midplane of the blow mould portion supported by the associated support, and the slide (16) comprises at least one yoke (30, 32) with two branches (34) that extend substantially in a plane perpendicular to the axis of articulation (A1) of the two supports (12) and that, in the closed position, at least partly surround the two supports (12), and **in that** the links (36) are articulated at the free ends of the two branches (34) and are stressed in compression in order to lock the blow-moulding unit.

2. Blow-moulding machine according to Claim 1,
**characterized in that** the slide (16) comprises two yokes (30, 32) offset in the axial direction of articulation of the two supports, such that each support is associated with at least two links (36) offset in the axial direction.

3. Blow-moulding machine according to either of the preceding claims, **characterized in that**, in the closed position, the main axes of the links (36) are directed in one and the same direction perpendicular to the direction of translation of the slide (16).

4. Blow-moulding machine according to any one of the preceding claims, **characterized in that**, in the closed position, the main axes of the two links (36) associated respectively with the one and with the other support (12) are aligned.

5. Blow-moulding machine according to any one of the preceding claims, **characterized in that** at least one of the two supports (12) comprises several associated links (36).

6. Blow-moulding machine according to any one of the preceding claims, **characterized in that** the slide (16) is controlled by a cylinder (40).

7. Blow-moulding machine according to any one of the preceding claims, **characterized in that** the moulding unit (10) is secured to a turntable driven in a continuous rotational motion, and **in that** the slide (16) is controlled by a device with a cam (42) and with a cam follower (44).

8. Blow-moulding machine according to Claim 7,
**characterized in that** the slide (16) is pushed by the cam (42) from its closed position to its open position, counter to an elastic device that is constantly pushing it towards its closed position.

9. Blow-moulding machine according to Claim 8 taken in combination with Claim 2, **characterized in that** the elastic device consists of a cylinder (40).

10. Blow-moulding machine according to Claim 9,
**characterized in that**, when the mould is being opened, the cylinder (40) exerts a reduced closing force on the slide (16).

11. Blow-moulding machine according to Claim 10,
**characterized in that** the cylinder (40) is a double-acting cylinder comprising two chambers of variable volume (50, 52) delimited by a piston (48) and presenting different effective cross sections to the piston such that, when the two chambers are supplied with a fluid at an identical pressure, one of the chambers (52) exerts a greater force on the piston (48) than the other (50), which tends to push the slide (16) towards its closed position.

12. Blow-moulding machine according to any one of the preceding claims, **characterized in that** the direction of sliding of the slide (16) and the axis of articulation (A1) of the two supports (12) are mutually perpendicular and are contained in a plane containing the parting line of the mould.

## Patentansprüche

1. Maschine zum Blasformen von Artikeln aus thermoplastischem Material, jener Art, bei der eine Blasformeinheit (10) eine aus zwei Teilen bestehende Blasform aufweist, die jeweils durch einen beweglichen Träger (12) getragen werden, jener Art, bei der die beiden beweglichen Träger (12) aneinander angelenkt sind, jener Art, bei der die Bewegungen der beiden Träger (12) zwischen einer geöffneten Stellung und einer geschlossenen Stellung durch einen Mechanismus gesteuert werden, der einen Schieber (16) aufweist, der translatorisch zwischen einer Öffnungsstellung und einer Schließstellung beweglich ist, jener Art, bei der jeder Träger (12) über mindestens eine zugehörige Schwinge (36), die einerseits an dem Schieber (16) und andererseits an dem Träger (12) angelenkt ist, mit dem Schieber (16) verbunden ist, jener Art, bei der, in geschlossener Stellung, die Hauptachsen der Schwingen (36), die jeweils so festgelegt sind, dass sie eine gemeinsame Senkrechte zu den Achsen des Gelenks der Schwinge (36) am Schieber (16) und am zugehörigen Träger (12) sind, entlang einer gleichen senkrecht zur Gelenkachse (A1) und senkrecht zur Verbindungsebene der Formteile verlaufenden Richtung ausgerichtet sind, so dass der Steuermechanismus die Verriegelung der Formeinheit in geschlossener Stellung gewährleistet,
**dadurch gekennzeichnet, dass**, in geschlossener Stellung, die Hauptachsen der Schwingen (36) in einer mittleren Ebene des Blasformteils angeordnet sind, der von dem zugehörigen Träger getragen wird, und der Schieber (16) mindestens einen Bügel (30, 32) mit zwei Schenkeln (34) aufweist, die sich im Wesentlichen in einer senkrecht zur Gelenkachse (A1) der beiden Träger (12) verlaufenden Ebene erstrecken und die, in geschlossener Stellung, die beiden Träger (12) zumindest teilweise umgeben, und dass die Schwingen (36) an den freien Enden der beiden Schenkel (34) angelenkt sind und mit Druck beaufschlagt werden, um das Verriegeln der Blasformeinheit zu gewährleisten.

2. Blasformmaschine nach Anspruch 1, **dadurch gekennzeichnet, dass** der Schieber (16) zwei Bügel (30, 32) aufweist, die in Axialrichtung des Gelenks der beiden Träger versetzt sind, so dass jeder Träger mindestens zwei in Axialrichtung versetzten Schwingen (36) zugeordnet ist.

3. Blasformmaschine nach einem der vorhergehenden Ansprüche, **dadurch gekennzeichnet, dass**, in geschlossener Stellung, die Hauptachsen der Schwingen (36) in einer gleichen senkrecht zur Translationsbewegungsrichtung des Schiebers (16) verlaufenden Richtung ausgerichtet sind.

4. Blasformmaschine nach einem der vorhergehenden Ansprüche **dadurch gekennzeichnet, dass**, in geschlossener Stellung, die Hauptachsen der Schwingen (36), die dem einen bzw. dem anderen der Träger (12) zugeordnet sind, aufeinander ausgerichtet sind.

5. Blasformmaschine nach einem der vorhergehenden Ansprüche **dadurch gekennzeichnet, dass** mindestens einer der beiden Träger (12) mehrere zugehörige Schwingen (36) aufweist.

6. Blasformmaschine nach einem der vorhergehenden Ansprüche **dadurch gekennzeichnet, dass** der Schieber (16) durch einen Zylinder (40) gesteuert wird.

7. Blasformmaschine nach einem der vorhergehenden Ansprüche **dadurch gekennzeichnet, dass** die Formeinheit (10) fest mit einem Karussell verbunden ist, das mit einer kontinuierlichen Drehbewegung betätigt wird, und dass der Schieber (16) durch eine Kurvenvorrichtung (42) und eine Kurvenabtastrolle (44) gesteuert wird.

8. Blasformmaschine nach Anspruch 7, **dadurch gekennzeichnet, dass** der Schieber (16) durch die Kurve (42) entgegen einer elastischen Vorrichtung, die ihn dauerhaft in Richtung seiner Schließstellung belastet, aus seiner Schließstellung in seine Öffnungsstellung belastet wird.

9. Blasformmaschine nach Anspruch 8 in Kombination mit Anspruch 2, **dadurch gekennzeichnet, dass** die elastische Vorrichtung durch einen Zylinder (40) gebildet wird.

10. Blasformmaschine nach Anspruch 9, **dadurch gekennzeichnet**, das der Zylinder (40) während des Öffnens der Form auf den Schieber (16) eine verringerte Schließkraft ausübt.

11. Blasformmaschine nach Anspruch 10, **dadurch gekennzeichnet, dass** der Zylinder (40) ein doppeltwirkender Zylinder ist, der zwei Kammern mit veränderlichem Volumen (50, 52) aufweist, die durch einen Kolben (48) begrenzt werden und unterschiedlich auf den Kolben wirksame Abschnitte aufweisen, so dass, wenn die beiden Kammern mit einem Fluid mit gleichen Druck gespeist werden, eine der Kammern (52) auf den Kolben (48) eine größere Kraft als die andere (50) ausübt, was dahingehend wirkt, den Schieber (16) in die Schließstellung vorzubelasten.

12. Blasformmaschine nach einem der vorhergehenden Ansprüche **dadurch gekennzeichnet, dass** die Gleitrichtung des Schiebers (16) und die Gelenkachse (A1) der beiden Träger (12) senkrecht zueinander verlaufen und in einer die Formverbindungsebene enthaltende Ebene enthalten sind.
